(19) Europäisches Patentamt
European Patent Office
Office européen des brevets

(11) Numéro de publication: **0 238 402 B1**

(12) **FASCICULE DE BREVET EUROPEEN**

(45) Date de publication du fascicule du brevet: **30.05.90**

(51) Int. Cl.$^5$: **C 22 B 59/00**, C 01 F 17/00

(21) Numéro de dépôt: **87400558.0**

(22) Date de dépôt: **13.03.87**

(54) **Procédé de séparation de terres rares.**

(30) Priorité: **19.03.86 FR 8603889**

(43) Date de publication de la demande:
**23.09.87 Bulletin 87/39**

(45) Mention de la délivrance du brevet:
**30.05.90 Bulletin 90/22**

(84) Etats contractants désignés:
**AT DE FR**

(56) Documents cités:
**FR-A-1 503 042**
**US-A-2 900 231**

**CHEMICAL ABSTRACTS, vol. 78, page 278, résumé no. 152030h, Columbus, Ohio, US; Y. HIRASHIMA et al.: "Rare earth elements. XXXIII. Extraction of rare earth elements from bastnaesite by mineral acids", & NIPPON KAGAKU KAISHI 1973, (3), 496-9**

**PATENT ABSTRACTS OF JAPAN, vol. 7, no. 155 (C-175), 7 juillet 1983, page 154 C 175; & JP-A-58 67 836 (DOUWA KOGYO K.K.) 22-04-1983**

(73) Titulaire: **RHONE-POULENC CHIMIE**
**25, quai Paul Doumer**
**F-92408 Courbevoie Cédex (FR)**

(72) Inventeur: **Leveque, Alain**
**18, rue du Général Guillaumat**
**F-17000 La Rochelle (FR)**
Inventeur: **Le Loarer, Jean-Luc**
**24, rue du Général Guillaumat**
**F-17000 La Rochelle (FR)**

(74) Mandataire: **Dutruc-Rosset, Marie-Claude et al**
**RHONE-POULENC INTERSERVICES Service Brevets Chimie 25, Quai Paul Doumer**
**F-92408 Courbevoie Cédex (FR)**

(56) Documents cités:
**CHEMICAL ABSTRACTS, vol. 99, 1983, page 188, résumé no. 8891f, Columbus, Ohio, US; & JP-A-58 45 341 (AGENCY OF INDUSTRIAL SCIENCES AND TECHNOLOGY KIYOMI KAGAKU K.K.) 16-03-1983**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 238 402 B1

(56) Documents cités:

**PATENT ABSTRACTS OF JAPAN, vol. 1, no. 91 (C-77) 24 aou7t 1977, page 1900 C 77; & JP-A-52 50 920 (MITSUI KINZOKU KOGYO K.K.) 23-04-1977**

**PATENT ABSTRACTS OF JAPAN, vol. 1, no. 157 (C-77) 14 décembre 1977, page 3414 C 77; & JP-A-52 98 615 (MITSUBISHI KASEI KOGYO K.K.) 18-08-1977**

**SOVIET INVENTIONS ILLUSTRATED, Derwent Publications Ltd, Section Chemical, week CO9, résumé no. 15990C/09, 9 avril 1980; & SU-A-601 971 (A.M. ROZEN) 02-07-1976**

**CHEMICAL ABSTRACTS, vol. 79, 1978, page 256, résumé no. 35574y, Columbus, Ohio, US; A.V. NIKOLAEV et al.: "Distribution, separation, and salting out diagrams of aqueous neodymium nitrate-nitric acid-tributyl phosphate system", & SER. KHIM. NAUK 1973, (2), 26-32**

**CHEMICAL ABSTRACTS, vol. 101, 1984, page 416, résumé no. 79347d, Columbus, Ohio, US; A.A: KOLESNIKOV et al.: "Study of heterogeneous equilibrium in the lanthanum(III), nitrate-neodymium(III) nitrate-samarium(III) nitrate-water-tributyl phosphate system in the microconcentration region", & ZH. NEORG. KHIM 1984, 29(7), 1874-6**

**CHEMICAL ABSTRACTS, vol. 100, 1984, page 128, résumé no. 123443n, Columbus, Ohio, US; V.N. LEBEDEV et al.: "Isolation of a didymium concentrate from the rest of rare earth elements. Pt. II. Selection of an extraction system", & DEPOSITED DOC, 1982, VINITI 5872-82, 6 pp.**

**JOURNAL OF CHEM. TECH. BIOTECHNOL., vol. 29, 1979, pages 193-209, Blackwell Scientific Publications, Oxford, GB; C.G. BROWN et al.: "Solvent extraction used in industrial separation of rare earths"**

## Description

La présente invention concerne un procédé de séparation de terres rares contenues dans des minerais ou des concentrés riches en fluocarbonates de terres rares notamment de bastnaésite. Plus précisément, l'invention a pour objet un procédé perfectionné pour séparer le néodyme, éventuellement en association avec le praésodyme des autres terres rares, contenus dans la bastnaésite.

La terme "terres rares" utilisé conformément à l'invention comprend les éléments terres rares ayant des numéros automatiques de 57 à 71 inclus et l'yttrium de numéro atomique égal à 39.

Dans l'exposé qui suit de la présente invention, on entend par "terres rares cériques" les éléments les plus légers des terres rares commençant avec le lanthane et s'étendant au néodyme conformément au numéro atomique et par "terres rares yttriques" les éléments les plus lourds des terres rares conformément au numéro atomique, commençant avec le samarium et finissant avec le lutécium et comprenant l'yttrium. De plus, on désigne par "terres rares trivalentes" les élémentes terres rares ayant des numéros atomiques égaux à 39, 57, 59 à 71.

Le terme "didyme" est l'appelation commune d'un mélange de néodyme et de praséodyme quelles que soient leurs proportions.

Le terme "bastnaésite" utilisé désigne au sens large un minerai de terres rares comprenant des fluocarbonates de terres rares avec ou sans autre constituant notamment une gangue minérale ainsi que les concentrés de ces minerais.

Le développement des aimants à base de terres rares et plus particulièrement ceux à base de néodyme et de praséodyme en alliage avec le fer impose de mettre en oeuvre des procédés de séparation performants techniquement et économiquement.

Les procédés actuellement pratiques pour purifier les terres rares à partir des minerais sont orientés soit vers une valorisation de l'ensemble des terres rares séparées, ce qui est lourd et coûteux, soit vers une valorisation d'une fraction riche en terres rares de prix élevé en particulier l'europium, les terres rares yttriques et l'yttrium.

De nombreux procédés ont été décrits et sont pratiqués industriellement avec les objectifs ci-dessus, à partir des matières premières classiques des terres rares, monazite, bastnaésite ou xénotime.

Les procédés proposés dans le cas d'une valorisation complète des terres rares mettent en oeuvre généralement une attaque à la soude suivie d'une redissolution par les acides chlorhydrique ou nitrique des hydroxydes obtenus. Sur les solutions de chlorures ou de nitrates de terres rares, on sépare les terres rares entre elles par des opérations d'extraction liquide-liquide successives.

Dans le cas de la bastnaésite, on peut effectuer comme décrit dans Deco Trefoil, November-December 1967 p.9, une précalcination du minerai qui permet lors de la reprise à l'acide chlorhydrique de ne solubiliser qu'une partie du cérium avec le mélange des autres terres rares. A partir de la solution de chlorures de terres rares, on effectue une séparation par solvant de l'europium et de la fraction des terres rares yttriques.

Par ailleurs, il est également connu de procéder à la séparation des metaux de terres rares selon une technique d'echanges d'ions [Chemical Abstracts *99*, 8891f (1983)] en mettant en oeuvre une solution résultant de la lixiviation de la bastnaésite par l'acide nitrique.

Comme déjà évoqué précédemment, ces procédés s'ils permettent une récupération de néodyme et du praséodyme sont mal adaptés pour le faire dans des conditions économiques satisfaisantes en regard de l'application visée.

L'objectif de la présente invention est de disposer d'un procédé particulièrement efficace et économique de séparation du néodyme ou du didyme contenu dans la bastnaésite.

La présente invention a précisément pour objet un procéde de séparation du néodyme ou du didyme des terres rares contenus dans la bastnaésite caractérisé par le fait qu'il consiste:

à effectuer la calcination de la bastnaésite,

à réaliser une lixiviation ménagée de la bastnaésite calcinée à l'aide d'une solution d'acide nitrique en mettant en oeuvre une quantité d'acide nitrique sensiblement égale à la quantité stoechiométrique des terres rares trivalentes présentes dans le minerai, ce qui permet de solubiliser le néodyme et les terres rares trivalentes à l'exclusion du cérium et des traces de thorium qui se trouvent sous forme d'un résidu insoluble qui est ensuite séparé,

à procéder à la séparation et à la purification du néodyme ou du didyme par extraction liquide-liquide entre la phase aqueuse constituée par la solution aqueuse de nitrates de terres rares récupérée dans l'étape précédente et une phase organique contenant un agent d'extraction insoluble dans l'eau puis à récupérer le néodyme ou du didyme de la phase organique.

Dans les conditions de la présente invention, on constate que l'on obtient une excellente sélectivité cérium/autres terres rares lors de la lixiviation sélective réalisée à l'aide de la solution d'acide nitrique. Par ailleurs, il est mis en évidence que le thorium a un comportement voisin de celui du cérium au cours de la lixiviation si bien que le procédé de l'invention présente l'intérêt de conduire simultanément à l'élimination du cérium et des traces de thorium contenues dans la bastnaésite.

Toutefois, de faibles quantités de cérium et de thorium peuvent se solubiliser dans la solution d'acide nitrique. Dans le procédé selon l'invention, le cérium solubilisé est essentiellement à l'état tétravalent ce qui permet de le séparer facilement et conjointement au thorium du mélange des nitrates de terres rares

trivalentes, par exemple, par une opération de pré-neutralisation au cours de laquelle on élimine les faibles quantités de cérium et de thorium sous forme d'un résidue solide qui contient également le fluor solubilisé en faibles quantités lors de la reprise nitrique.

La lixiviation ménagée de la bastnaésite à l'aide de la solution d'acide nitrique permet de solubiliser sélectivement les terres rares trivalentes à l'exclusion du cérium dont les traces solubles le sont principalement sous forme tétravalente. Une telle lixiviation sélective est connue et décrite avec l'acide chlorhydrique par exemple, dans FR—A—1 503 042 mais dans un tel cas, le cérium est solubilisé à l'état trivalent et n'est donc pas aisément séparable des autres terres rares trivalentes.

Par ailleurs, le fait d'opérer en milieu nitrique, élargit les possibilités de choix du solvant d'extraction qui est utilisé ensuite pour la séparation des terres rares entres elles. On peut en effet dans ce cas, faire appel aux agents d'extraction anioniques, cationiques et solvatants ce qui n'est pas le cas en milieu chlorhydrique qui n'autorise communément la séparation des terres rares que par les agents d'extraction cationiques.

Conformément à l'invention, la source de terres rares est la bastnaésite qui est essentiellement un fluocarbonate de terres rares.

Les terres rares présentes sont essentiellement des terres rares cériques, lanthane, cérium, praséodyme et néodyme et les autres terres rares dénommées yttriques peuvent représenter jusqu'à environ 8%, le plus souvent moins de 2% exprimés par rapport au poids d'oxydes totaux. Il est possible qu'il y ait également du thorium présent en une quantité représentant au plus 1,5% du poids des oxydes totaux et le plus souvent à l'état de traces, correspondant à moins de 0,5% en poids.

Il est préférable selon l'invention de faire appel à un minerai de bastnaésite contenant plus de 10% en poids de terres rares exprimées en oxydes de terres rares.

Il est toutefois plus avantageux d'opérer sur des concentrés de minerais de bastnaésite obtenus d'une manière classique par enrichement à l'aide de techniques physiques, broyage et flottation ou concentration par gravité sur des tables à secousses et/ou un enrichissement selon une méthode chimique, par exemple, un traitement à l'aide d'un acide notamment une solution diluée d'acide chlorhydrique ou nitrique ayant une concentration d'environ 10% dans le but d'éliminer la calcite.

Les concentrés de bastnaésite contiennent généralement une teneur en terres rares exprimée en oxydes variant de 40 à 75%.

La première étape du procédé de l'invention consiste à effectuer la calcination de la bastnaésite à une température suffisamment élevée pour transformer les terres rares trivalentes sous une forme susceptible d'être solubilisée dans l'operation subséquente de lixiviation à l'acide nitrique et transformer le cérium sous une forme plus difficilement soluble.

La calcination est effectuée à haute température si bien que ladite température est choisie supérieure à 400°C. Au-delà, la température ne présente aucun caractère critique mais toutefois de bonnes conditions opératoires alliant efficacité et durée de l'opération consistent à travailler entre 600 et 800°C.

La durée de la calcination dépend de la température de calcination: elle est d'autant plus courte que la température est plus élevée. L'opération de calcination dure généralement entre 30 minutes et 3 heures.

Après l'opération de calcination, on effectue une lixiviation ménagée de la bastnaésite calcinée à l'aide d'une solution aqueuse d'acide nitrique permettant de solubiliser sélectivement les terres rares trivalentes.

La concentration de la solution d'acide nitrique n'est pas critique: elle peut varier dans de larges limites, par exemple, de 1 à 14 N mais il est préférable de faire appel à une solution aqueuse d'acide nitrique de concentration 3 à 9N.

La quantité d'acide utilisée est un élément important du procédé; elle est réglée en fonction de l'efficacité de solubilisation et de la sélectivité recherchées pour la séparation du cérium des autres terres rares. Une excellente séparation cérium/terres rares alliée à un très bon taux de récupération des terres rares trivalents notamment du néodyme est obtenue en mettant en oeuvre une quantité d'acide correspondant à la stoechiomètrie des terres rares trivalentes. Cette quantité peut être bien sur variable selon l'origine de la bastnaésite qui peut entraîner une variation de la répartition des terres rares entre elles; toutefois le plus souvent les bastnaésites contiennent environ autant de cérium que des autres terres rares et donc dans ce cas la quantité d'acide mise en oeuvre correspond à la moitié de la stoechiomètrie de toutes les terres rares y compris le cérium du minerai initial. La quantité d'acide mise en oeuvre préférentiellement est la quantité correspondant sensiblement à la stoechiomètrie des terres rares trivalentes mais il est possible de mettre en oeuvre un excès pouvant atteindre 50% de la quantité stoechiométrique.

La lixiviation est effectuée à une température qui n'est pas déterminante et qui peut être choisie entre 20 et 90°C.

Le temps de séjour dans la solution de lixiviation dépend dans une certaine mesure du minerai et des conditions de calcination. Il est compris généralement entre 30 minutes et 2 heures.

De bonnes conditions de séparation sont obtenues lors d'un traitement à 60°C pour un temps de séjour d'une heure.

En fin d'opération, la solution aqueuse de nitrates de terres rares est séparée d'un résidu solide selon une technique clasique de séparation liquide-solide par exemple par filtration ou centrifugation.

On recueille un résidu solide contenant essentiellement le cérium principalement sous forme d'oxyde

ainsi que les éventuelles traces de thorium. Ce résidu peut être valorisé tel quel comme concentré de cérium.

En ce que concerne la solution de lixiviation récupérée, on précise à titre indicatif, que lorsque l'on conduit le procédé selon les conditions données préférentiellement, on solubilise dans la solution de lixiviation moins de 10% de cérium et plus de 90% des terres rares trivalentes incluant le néodyme initialement présents dans la bastnaésite.

La concentration des terres rares dans la solution obtenue dépend de la concentration de l'acide nitrique mis en oeuvre pour la lixiviation. Dans les conditions préférées, la concentration exprimée en oxydes de terres rares est comprise entre 150 et 500 g/l.

Pour la suite des séparations il peut être avantageux d'éliminer les traces de cérium tétravalent et de thorium présentes dans la solution aqueuse de nitrates de terres rares.

A cet effet on effectue une pré-neutralisation à l'aide d'une base qui est de préférence de l'ammoniac ou de la soude.

La quantité de base additionnée qui peut être apportée sous forme solide, gazeuse dans la cas de l'ammoniac, ou de solution aqueuse est déterminée de telle sorte que le pH de la solution aqueuse de nitrates de terres rares soit compris entre 2 et 4.

Dans pareilles conditions de pH, il y a précipitation du cérium tétravalent, du thorium et du fluor solubilisé à la reprise nitrique.

On sépare le précipité d'une manière classique et l'on recueille une solution aqueuse de nitrates de terres rares à partir de laquelle on sépare le néodyme ou du didyme.

La séparation du néodyme ou du didyme des autres terres rares trivalents est effectuée par extraction liquide-liquide entre une phase aqueuse contenant les nitrates de terres rares et une phase organique contenant un agent d'extraction insoluble dans l'eau puis contre-extraction du néodyme ou du didyme de la phase organique.

L'agent d'extraction mis en oeuvre dans le procédé de l'invention peut être choisi parmi tous les agents d'extraction présentant une sélectivité entre les terres rares.

L'agent d'extraction mis en oeuvre peut être choisi parmi la classe des agents d'extraction anioniques, celle des agents d'extraction solvatants ou celle des agents d'extraction cationiques.

Les agents d'extraction anioniques mis en oeuvre sont notamment les composés organiques à longue chaîne comportant des fonctions amines.

Les chaînes hydrocarbonées de ces composés ayant généralement, de préférence, entre environ 5 et 30 atomes de carbone.

Parmi ceux-ci on peut citer par exemple:

les amines tertiaires et notamment les produits commercialisés sous les marques Alamine 336 et Adogen 364 qui sont constitués d'amines tertiaires de formule $R_3N$ dans laquelle le radical hydrocarboné R a de 8 à 10 atomes de carbone,

les nitrates d'ammonium quaternaires et en particulier les produits dérivés des produits commercialisés sous les marques Adogen 464 et Aliquat 336 qui sont constitués de sels d'ammonium quaternaires de formule:

$$[R_3N{-}CH_3]^+Cl^-$$

dans laquelle le radical hydrocarboné R a de 8 à 10 atomes de carbone.

Les agents d'extraction cationiques mis en oeuvre sont notamment les acides organo-phosphorés les acides aliphatiques ou aromatiques, halogénés ou non; les acides naphténiques; les β-dicétones.

Parmi ceux-ci, on citera:

les acides organo-phosphorés de formule générale:

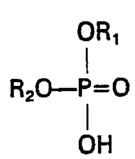 ou 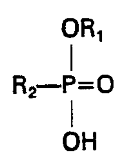 ou 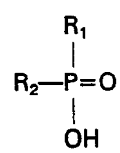

dans lesquelles $R_1$ et $R_2$ représentent des radicaux hydrocarbonés aliphatiques ou aromatiques tels que le nombre total d'atomes de carbone de ces groupements soit au moins égal à 10. On préfère mettre en oeuvre l'acide di(éthyl-2 hexyl) phosphorique et l'acide bis (éthyl-2 hexyl) phosphonique;

les acides carboxyliques commercialisés par la Société Shell Chemicals sous la dénomination "Versatic" et qui répondent à la formule générale:

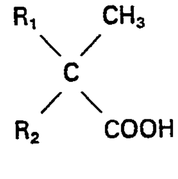

dans laquelle $R_1$ et $R_2$ sont des radicaux hydrocarbonés substitués ou non, et, en particulier, l'acide "Versatic 10" (marque déposée) dérivé du procédé Shell de carboxylation d'oléfines en $C_9$ et pour lequel $R_1$ et $R_2$ sont des radicaux hydrocarbonés dont la somme des atomes de carbone des deux radicaux est égale à 7;

Les agents d'extraction solvatants mis en oeuvre sont notamment les sulfoxydes, les composés organophosphorés neutres.

Parmi ceux-ci, on citera:

les sulfoxydes de formule générale:

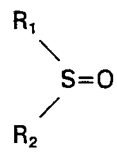

dans laquelle $R_1$ et $R_2$ sont des radicaux hydrocarbonés aromatiques et/ou aliphatiques ayant, de préférence, au moins 4 atomes de carbone et, par exemple, le di-n-heptylsulfoxyde, le di-n-octylsulfoxyde;

les composés organo-phosphorés neutres de formule genérale:

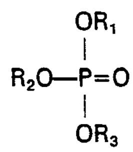 ou 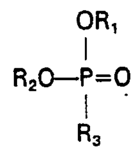 ou

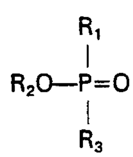 ou 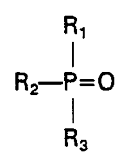

dans lesquelles $R_1$, $R_2$ et $R_3$ représentent des radicaux hydrocarbonés aromatiques ou cycloaliphatiques et/ou aliphatiques ayant, de préférence, au moins 4 atomes de carbone.

On peut citer, par exemple, le tributylphosphate, le dibutyl butylphosphonate, le bis (éthyl-2 hexyl) éthyl-2 hexyl phosphonate, l'oxyde de tri-n-octylphosphine.

Parmi ces composés, on préfère mettre en oeuvre le tributyl phosphate.

La phase organique selon le procédé de l'invention contient éventuellement outre l'agent d'extraction, un diluant organique. Comme diluants susceptibles d'être utilisés, on peut mettre en oeuvre ceux habituellement mis en oeuvre pour réaliser des opérations d'extraction liquide-liquide. Parmi ceux-ci, on peut citer les hydrocarbures aliphatiques comme par exemple, le dodécane et les coupes pétrolières du type kérosène; les hydrocarbures aromatiques comme par exemple, les coupes pétrolières constituées de mélange d'alkylbenzènes notamment les coupes du type Solvesso commercialisées par la Société EXXON. On peut également utiliser un mélange de ces diluants.

La proportion en agent d'extraction dans la phase organique n'est pas critique et peut varier dans de larges limites. Toutefois, il est, en général, avantageux que celle-ci soit la plus élevée possible. Ainsi, dans le cas des agents d'extraction anioniques et cationiques, une proprtion comprise entre 10 et 40% en volume rapportée à la phase organique conduit à des conditions hydrodynamiques de séparation avantageuses. Dans le cas des agents d'extraction solvantants, certains d'entre eux (les moins visqueux) peuvent être utilisés purs, c'est-à-dire non dilués, ce qui est extrêmement avantageux, car cela conduit à des capacités d'extraction très importante.

La phase organique selon le procédé de l'invention peut également contenir divers agents modifieurs dont un des buts essentiels est d'améliorer les propriétés hydrodynamiques du système sans altérer les propriétés complexantes de l'agent d'extraction. Parmi les composés convenant bien, on peut citer notamment, les composés à fonction alcool et, en particulier, les alcools lourds dont le nombre d'atomes de carbone est compris entre 4 et 15. Une proportion pouvant atteindre 20% en volume rapportée à la phase organique est généralement favorable.

On opère la séparation des terres trivalentes entres elles en opérant à contre-courant sur plusieurs étages théoriques d'extraction, chaque étage étant constitué par l'opération mélange-décantation.

On introduit la solution aqueuse de nitrates de terres rares à séparer à un étage intermédiaire du système à contre-courant réalisant ainsi deux zones de séparation "extraction" et "lavage sélectif" de part et d'autre de ce point d'alimentation. A chaque extrémité du dispositif, on réalise des reflux partiels des solutions contenant les éléments séparés en mettant en ouvre les processus adaptés aux propriétés de l'agent d'extraction utilisé, acide ou base pour un agent d'extraction cationique, eau ou vapeur pour diluer un concentrer dans le cas d'agents d'extraction solvatants ou anioniques. L'efficacité de la séparation dépend du nombre d'étages et du facteur de séparation.

Pour le calcul de séparation, on se référera à la littérature notamment aux articles de MM. J. Helgorsky et A. Leveque dans l'Encyclopédie Ullmanns, Band 21. p. 235 à 271 (1982) et de Brown et al, J. Chem. Tech. Biotechnol, *29*, 193—209 (1979).

Après les opérations d'extraction et de lavage suivies d'une séparation de la phase aqueuse et de la phase organique, on effectue une étape de contre-extraction de terres rares contenues dans le solvant d'extraction.

On sépare la ou les terres rares extraites dans la phase organique par mise en contact de cette dernière avec de l'eau ou une solution légèrement acide inférieure à 1N environ, de préférence une solution d'acide nitrique, dans le cas des agents d'extraction anioniques ou solvatants ou d'une solution aqueuse acide plus concentrée, supérieure à 3N environ, de préférence une solution aqueuse d'acide nitrique, dans le cas d'agents d'extraction cationiques.

La ou les terres rares extraites sont recueilles dans la phase aqueuse tandis que le solvant d'extraction peut être recyclé à l'étape d'extraction.

Selon l'invention, on peut réaliser la séparation du néodyme ou du didyme selon plusieurs modes de réalisation. L'ordre des séparations n'a pas d'importance.

Pour séparer le néodyme, on peut effecteur selon un ordre 1, la séparation du lanthane-praséodyme du mélange néodyme-terres rares yttriques puis séparer le néodyme des terres rares yttriques ou selon un ordre 2, effectuer la séparation des terres rares cériques (La, Nd, Pr) des terres rares yttriques puis séparer le lanthane et le praséodyme du néodyme.

Plus précisément selon l'ordre 1 de séparation, on met en contact la solution aqueuse de nitrates de terres rares avec le solvant d'extraction de façon à extraire en phase organique les nitrates de néodyme et des terres rares yttriques et laisser en phase aqueuse les nitrates de lanthane et de praséodyme, à contre-extraire les nitrates de néodyme et des terres rares yttriques de la phase organique pour les récupérer en phase aqueuse, à mettre cette solution en contact avec un solvant d'extraction de façon à extraire les nitrates de terres rares yttriques en phase organique et laisser le nitrate de néodyme en phase aqueuse. Selon l'ordre 2 de séparation, on met en contact la solution aqueuse de nitrates de terres rares avec le solvant d'extraction de façon à extraire en phase organique, les nitrates de terrres rares yttriques et laisser en phase aqueuse les nitrates de lanthane, de néodyme et de praséodyme, à mettre cette solution en contact avec un solvant d'extraction de façon à extraire le nitrate de néodyme en phase organique et laisser les nitrates de lanthane et de praséodyme en phase aqueuse, à contre-extraire le nitrate de néodyme de la phase organique pour le récupérer en phase aqueuse.

Pour obtenir du didyme, on peut effectuer selon un ordre 1 la séparation du lanthane du mélange didyme-terres rares yttriques puis séparer le didyme des terres rares yttriques ou selon un ordre 2 effectuer la séparation des terres rares cériques (La, Nd, Pr) des terres rares yttriques puis séparer le lanthane du didyme.

Les solutions de néodyme ou de didyme obtenues conformément au procédé de l'invention constituent des matières premières de choix pour la production de carbonates, de chlorures, de fluorures ou d'oxydes qui sont utilisés comme intermédiaires, notamment dans la fabrication des métaux pour aimants.

Les exemples qui suivant illustrent l'invention sans toutefois la limiter. Dans les exemples, les pourcentages donnés sont exprimés en poids.

Exemple 1

Cet exemple illustre la sélectivité de la solubilisation cérium/terres rares trivalentes lors de la lixiviation ménagée d'un concentré de bastnaésite calciné effectuée selon l'invention.

On part d'un concentré de minerai de bastnaésite [1] ayant la composition pondérale suivante:

| | |
|---|---|
| perte au feu | 17,4 % |
| $CaO$ | 0,25% |
| $P_2O_5$ | 1,9% |
| $BaO$ | 1,75% |
| $F^-$ | 5% |
| $Fe_2O_3$ | 0,3% |
| $SiO_2$ | 0,1% |
| $Al_2O_3$ | 0,05% |

oxydes de terres rares totaux: 74,5% dont la répartition est la suivante:

| | | |
|---|---|---|
| $CeO_2$ | : | 51,0% |
| $La_2O_3$ | : | 32,0% |
| $Pr_6O_{11}$ | : | 4,2% |
| $Nd_2O_3$ | : | 11,8% |
| $Sm_2O_3$ | : | 0,8% |
| $Eu_2O_3$ | : | 0,1% |
| $Gd_2O_3$ | : | 0,2% |
| $Y_2O_3$ | : | 0,2% |
| $ThO_2$ | : | 0,3% |

Dans un four à moufle, on effectue la calcination de 1 kg de concentré de bastnaésite pendant 3 heures à 700°C.

On obtient 831 g d'un concentré de bastnaésite calciné [2] ayant la composition suivante:

| | | |
|---|---|---|
| perte au feu | : | 0,6% |
| CaO | : | 0,3% |
| $P_2O_5$ | : | 2,3% |
| BaO | : | 2,1% |
| $F^-$ | : | 5,9% |
| oxydes de terres rares totaux | : | 89,6% |

On réalise ensuite l'opération de lixiviation ménagée de 100 g de ce concentré de bastnaésite calciné [2] en le traitant avec 120 $cm^3$ d'acide nitrique 6,5N.

Le traitement est effectué sous agitation à 60°C et le temps de séjour est de 1 heure.

On sépare le résidu solide de la solution de nitrates de terres rares par filtration sur Büchner.

La solution récupérée contient des terres rares dont la concentration exprimée en oxydes est de 370 g/l, 4,8 g/l de fluor et 0,35 g/l de $Fe_2O_3$. Sa répartition en terres rares est la suivante:

| | | |
|---|---|---|
| $CeO_2$ | : | 6,0% |
| $La_2O_3$ | : | 60,3% |
| $Pr_6O_{11}$ | : | 8,3% |
| $Nd_2O_3$ | : | 22,6% |
| $Sm_2O_3$ | : | 1,6% |
| autres terres rares | : | 1,2% |

Ces résultats correspondent aux taux de solubilisation des terres rares contenues dans le concentré de bastnaésite de départ.

| | | |
|---|---|---|
| $CeO_2$ | : | 5,6% |
| $La_2O_3$ | : | 90,6% |
| $Pr_6O_{11}$ | : | 95,3% |
| $Nd_2O_3$ | : | 92,1% |
| $Sm_2O_3$ | : | 93,1% |

On remarque que le rendement de solubilisation des terres rares trivalentes est de 95,3% et celui du cérium de 5,6%.

De plus, on constate que le cérium soluble set constitué à 71,1% de cérium IV. Le fluor n'est solubilisé qu'à un taux de 9,8%.

Exemple 2

On effectue un série d'essais selon le mode opératoire de l'exemple 1 afin de mettre en évidence l'influence de la quantité d'acide nitrique mise en oeuvre sur la sélectivité cérium/terres rares.

A cet effet, on prend 4 fractions de 100 g de concentré de bastnaésite calciné [2] de l'exemple 1.

On l'attaque selon les conditions de l'exemple 1 par des quantités variables d'acide nitrique 6,5N qui sont indiquées dans le tableau I suivant.

Après séparation des résidus et analyses, on obtient les taux de solubilisation suivants:

TABLEAU I

| quantité $HNO_3$ 6,5 N | 120 $cm^3$ | 180 $cm^3$ | 240 $cm^3$ | 360 $cm^3$ |
|---|---|---|---|---|
| concentration de la solution de nitrates de terres rares exprimée en oxydes de terres ruges totaux (g/l) | 370 | 310 | 340 | 240 |
| taux de solubilisation (en %) | | | | |
| lanthane | 90,6 | 92,0 | 98,4 | 96,6 |
| cérium | 5,6 | 31,5 | 85,9 | 95,9 |
| praséodyme | 95,3 | 96,0 | 98,7 | 96,6 |
| néodyme | 92,1 | 90,7 | 90,9 | 96,7 |
| terres rares trivalentes | 95,3 | 95 | 96,2 | 97 |
| thorium | <1 | 15 | 62,5 | 87,5 |
| fluor | 9,8 | | 80 | |
| $Ce^{IV}$/Ce total | 0,71 | 0,82 | 0,94 | 0,98 |

Au vu des résultats obtenus, la quantité d'acide adéquate correspond à la stoechiomètrie des terres rares trivalentes.

Exemple 3

Cet exemple montre par rapport à l'exemple 2, l'influence de la concentration de l'acide nitrique.

On opère comme dans l'exemple 2 à la différence prés que l'on effectue la lixiviation du concentré de bastnaésite calciné [2] à l'aide d'une solution aqueuse d'acide nitrique 3,5N.

Les résultats obtenus sont consignés dans le tableau II.

TABLEAU II

| quantité $HNO_3$ 3,5N | 220 $cm^3$ | 340 $cm^3$ | 450 $cm^3$ | 670 $cm^3$ |
|---|---|---|---|---|
| concentration de la solution de nitrates de terres rares exprimée en oxydes de terres rares totaux (g/l) | 150 | 145 | 135 | 95 |
| taux de solubilisation (en %) | | | | |
| lanthane | 75,8 | 94,9 | 95,1 | 96 |
| cérium | 0,1 | 16,7 | 41,1 | 45 |
| praséodyme | 83,9 | 95,3 | 95,3 | 95,5 |
| néodyme | 83,5 | 93 | 93,7 | 95,2 |
| samarium | 82,1 | 93,1 | 93,1 | 97 |
| terres rares trivalentes | 75,5 | 93,3 | 95,4 | 96 |
| thorium | <1 | 12 | 50 | 63 |

La comparaison des exemples 1 et 2 permet de mettre en évidence que la concentration de la solution aqueuse d'acide nitrique n'est pas critique.

Exemple 4

Cet exemple illustre la séparation du néodyme.

Le concentré de bastnaésite défini dans l'exemple 1 est calciné et soumis à une opération de lixiviation ménagée selon les conditions décrites dans l'exemple 1.

En fin de traitement, on sépare par filtration le résidue solide contenant essentiellement le cérium de la solution aqueuse de nitrates de terres rares ayant une concentration exprimée en oxydes de terres rares égale à 370 g/l.

On élimine de cérium tétravalent et les traces de thorium présentes dans ladite solution par addition d'une solution aqueuse d'ammoniaque 10 N jusqu'à obtention d'un pH égal à 3,5.

On sépare par filtration un residue solide contenant tout le cérium tétravalent et le thorium. L'analyse de ce résidu montre qu'il renferme également 86% du fluor et la quasi-totalité du fer solubilisés et 5% des terres rares trivalentes.

La solution de nitrates de terres rares récupérée a une concentration exprimé en oxydes de terres rares égale à 337 g/l et contient 0,7 g/l de fluor, moins de 10 mg/l de $Fe_2O_3$ et moins de 10 mg/l de $ThO_2$. Sa répartition en terres rares est la suivante:

63,0% de $La_2O_3$
1,8% de $CeO_2$
8,7% de $Pr_6O_{11}$
23,6% de $Nd_2O_3$
1,7% de $Sm_2O_3$
1,3% des autres terres rares

On réalise la concentration de cette solution par évaporation de ladite solution jusqu'à obtention d'une concentration exprimée en oxydes de terres rares de 490 g/l.

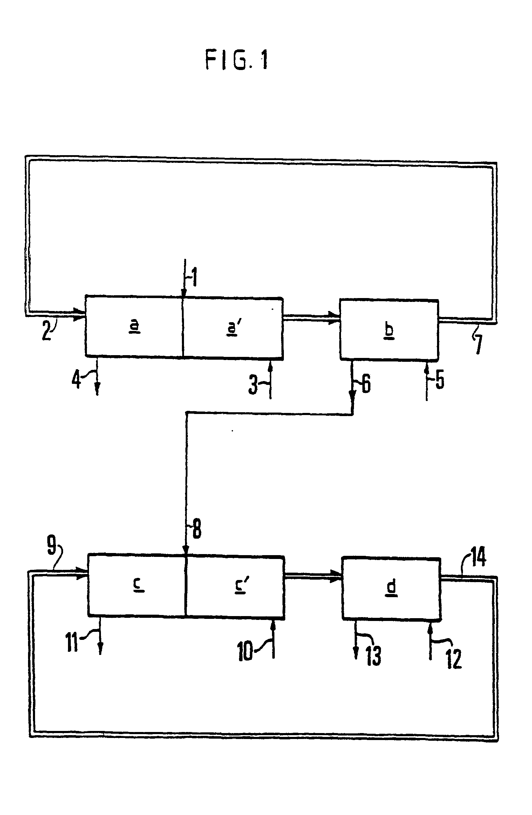

On soumet ensuite cette solution concentrée aux opération successives d'extraction liquide-liquide conduites en suivant le mode de mise en oeuvre illustré par la figure 1.

L'appareillage utilisé pour la séparation des terres rares comprend:

une première batterie d'extraction liquide-liquide à plusieurs étages du type mélangeur-décanteur fonctionnant à contre-courant et constituée d'une section d'extraction (a) et de lavage (a') comportant 40 étages théoriques et une section de contre-extraction (b) des terres rares extraites dans la phase organique comportant 10 étages théoriques

une deuxième batterie d'extraction liquide-liquide constitué d'une section d'extraction (c) et une section de lavage (c') comportant 40 étages théoriques et une section de contre-extraction (d) des terres rares extraites dans la phase organique comportant 10 étages théoriques.

L'agent d'extraction utilisé est le tributylphosphate. Il es mis en solution dans le kérosène à raison de 75% en volume et le mélange obtenu sera appelé solvant d'extraction.

Avant de détailler les différentes opérations, on préci-sera que l'on choisit comme entrée et sorte des unités d'extraction-lavage et de contre-extraction, le sens de circulation de la phase organique.

On introduit la solution aqueuse de nitrates de terres rares en 1 au 20 ème étage e la section extraction-lavage à un débit de 2,05 litres/heure

En entrée de la section extraction-lavage, on introduit en 2 la phase organique constitué par le solvant d'extraction à un débit de 8,8 litres/heure.

On introduit en 5, en sortie de la section de contre-extraction et à contre-courant de la phase organique, de l'eau acidifiée ($HNO_3$—0,1 N) à un débit de 4,4 litres/heure.

On recueille à l'entrée de la section de contre-extraction en 6, une solution aqueuse de nitrates de terres rares contenant le néodyme et les terres rares yttriques que l'on concentre par évaporation jusqu'à une concentration exprimée en oxydes de terres rares de 490 g/l. On en prélève 0,54 litre/heure qui constitue la production du concentré de néodyme et le reste, 1,78 litres/heure alimente en 3 la section extraction-lavage pour réaliser le reflux. Le concentré de néodyme a la composition exprimée en oxydes de terres rares suivante:

88,4% de $Nd_2O_3$
0,5% de $Pr_6O_{11}$
6,3% de $Sm_2O_3$
4,9% des autres terres rares

On recueille à l'entrée de la section extraction-lavage en 4, une solution aqueuse de nitrates de terres rares que l'on concentre par évaporation jusqu'à obtention d'une concentration exprimée en oxydes de terres rares de 490 g/l. On prélève 1,5 litres/heure qui constitue la production d'un concentré de lanthane et l'on recycle le reste en 2 au ler étage de la batterie. Ce concentré de lanthane a la composition exprimée en oxydes de terres rares suivante:

85,9% de $La_2O_3$
2,4% de $CeO_2$
11,7% de $Pr_6O_{11}$
moins de 0,01% de $Nd_2O_3$ et des autres terres rares.

On récupère en 7 à la sortie de la section de contre-extraction, le solvant d'extraction régénéré qui peut être recyclé en 2 dans la section extraction-lavage avec le même débit.

Le concentré de néodyme défini ci-dessus constitue l'alimentation de la deuxièm batterie d'extraction

liquide-liquide. On l'introduit en 8 au 20 ème étage de la section extraction-lavage.

En entrée de la section extraction-lavage, on introduit en 9 la phase organique constituée par le même solvant d'extraction à un débit de 3,15 litres/heure.

On introduit en 12, à contre-courant de la phase organique, de l'eau acidifiée à un débit de 1,6 litres/heure.

On recueille en 13, une solution de nitrates de terres rares que l'on concentre par évaporation jusqu'à obtention d'une concentration exprimée en oxydes de terres rares de 490 g/l. On en prélève 0,06 litre/heure qui constitue la production d'un concentré de terres rares yttriques et l'on recycle 0,78 litre/heure en 10 pour réaliser le reflux. Ce concentré de terres rares yttriques a la composition exprimée en oxydes de terres rares suivante:

56,2% de $Sm_2O_3$

43,7% des autres terres rares

0,12% de $Nd_2O_3$

On recueille à l'entrée de la section extraction-lavage en 11 une solution aqueuse de nitrate de néodyme que l'on concentre par évaporation jusqu'à une concentration exprimée en oxydes de terres rares de 490 g/l. On en prélève 0,48 l/h qui constitue la production de néodyme et l'on recycle, le reste en 9 avec la phase organique.

La pureté de néodyme produit est la suivante:

99,4% de $Nd_2O_3$

0,6% de $Pr_6O_{11}$

moins de 0,1% des autres terres rares.

On récupère en 14, à la sortie de la section de contre-extraction, le solvant d'extraction régénéré qui peut être recyclé en 9 dans la section extraction-lavage.

Cet exemple illustre la séparation du didyme.

Conformément aux modes opératoires décrits dans les exemples 1 et 4, on effectue les opérations suivantes:

calcination du concentré de bastnaésite défini dans l'exemple 1

lixiviation ménagée du concentré de bastnaésite calciné

séparation par filtration d'un résidu solide de la solution de nitrates de terres rares.

pré-neutralisation de ladite solution

séparation par filtration d'un résidu solide de la solution de nitrates de terres rares

concentration par évaporation de cette solution jusqu'à obtention d'une concentration exprimé en oxydes de terres rares de 490 g/l.

On soumet ensuite cette solution concentrée aux opérations successives d'extraction liquide-liquide conduites en suivant le mode de mise en oeuvre illustré par la figure 1.

L'appareillage utilisé pour la séparation des terres rares comprend:

une première batterie d'extraction liquide-liquide constituée d'une section d'extraction (a) et de lavage (a') comportant 48 étages théoriques et une section de contre-extraction (b) des terres rares extraites dans la phase organique comportant 10 étages théoriques.

une deuxième batterie d'extraction liquide-liquide constituée d'une section d'extraction (c) et une section de lavage (c') comportant 48 étages théoriques et une section de contre-extraction (d) des terres rares extraites dans la phase organique comportant 10 étages théoriques.

L'agent d'extraction utilisé est le tributylphosphate mis en solution dans le kérosène à raison de 75% en volume.

On décrit ci-après l'enchaînement des étapes.

On introduit la solution aqueuse de nitrates de terres rares en 1 au 20 ème étage de la section extraction-lavage à un débit de 2,05 litres/heure

En entrée de la section extraction-lavage, on introduit en 2 la phase organique constituée par le solvant d'extraction à un débit de 11,1 litres/heure.

On introduit en 5, en sortie de la section de contre-extraction et à contre-courant de la phase organique, de l'eau acidifiée ($HNO_3$—0,1 N) à un débit de 5,6 litres/heure.

On receuille à l'entrée de la section de contre-extraction en 6, une solution aqueuse de nitrates de terres rares contenant du didyme et des terres rares yttriques que l'on concentre par évaporation jusqu'à une concentration exprimée en oxydes de terres rares de 490 g/l. On en prélève 0,72 litre/heure qui constitue la production du concentré de didyme et le reste, 0,89 litre/heure alimente en 3 la section extraction-lavage pour réaliser le reflux. Le concentré de didyme a la composition exprimée en oxydes de terres rares suivante:

24,6% de praséodyme

66,8% de néodyme

moins de 0,01% de cérium

8,5% des autres terres rares

On recueille à l'entrée de la section extraction-lavage en 4, une solution aqueuse de nitrates de terres rares que l'on concentre par évaporation jusqu'à obtention d'une concentration exprimée en oxydes de terres rares de 490 g/l. On prélève 1,32 litres/heure qui constitue la production d'un concentré de lanthane et l'on recycle le reste en 2 au Ier étage de la batterie. Ce concentré de lanthane a la composition exprimée

en oxydes de terres rares suivante:

97,2% de $La_2O_3$

2,7% de $CeO_2$

moins de 0,1% de $Pr_6O_{11}$ et des autres terres rares.

On récupère en 7 à la sortie de la section de contre-extraction, le solvant d'extraction régénéré qui peut être recyclé en 2 dans la section extraction-lavage avec le même débit.

Le concentré de didyme défini ci-dessus constitue d'alimentation de la deuxième batterie d'extraction liquide-liquide. On l'introduit en 8 au 22 ème étage de la section extraction-lavage.

En entrée de la section extraction-lavage, on introduit en 9 la phase organique constituée par le même solvant d'extraction à un débit de 3,1 litres/heure.

On introduire en 12, à contre-courant de la phase organique, de l'eau acidifiée à un débit de 1,55 litres/heure.

On recueille en 13, une solution de nitrates de terres rares que l'on concentre par évaporation jusqu'à obtention d'une concentration exprimée en oxydes de terres rares de 490 g/l. On en prélève 0,06 litre/heure qui constitue la production d'un concentré de terres rares yttriques et l'on recycle 0,78 litre/heure en 10 pour réaliser le reflux. Ce concentré de terres rares yttriques a la composition exprimée en oxydes de terres rares suivante:

56,2% de $Sm_2O_3$

43,6% des autres terres rares

0,19% de $Nd_2O_3$

On recueille à l'entrée de la section extraction-lavage en 11 une solution aqueuse de nitrates de néodyme et de praséodyme que l'on concentre par évaporation jusq'à une concentration exprimée en oxydes de terres rares de 490 g/l. On en prélève 0,66 l/h qui constitué la production de didyme et l'on recycle, le reste en 9 avec la phase organique.

La qualité du didyme produit est la suivante:

26,9% de $Pr_6O_{11}$

73,1% de $Nd_2O_3$

moins de 0,01% des autres terres rares.

On récupère en 14, à la sortie de la section de contre-extraction, le solvant d'extraction régénéré qui peut être recyclé en 9 dans la section extraction-lavage.

**Revendications**

1. Procédé de séparation du néodyme ou du didyme des terres rares contenus dans la bastnaésite consistant:

à effectuer la calcination de la bastnaésite,

à réaliser une lixiviation ménagée de la bastnaésite calcinée à l'aide d'une solution d'acide nitrique en mettant en oeuvre une quantité d'acide nitrique sensiblement égale à la quantité stoeichiométrique des terres rares trivalentes présentes dans le minerai, ce qui permet de solubiliser le néodyme et les terres rares trivalentes à l'exclusion du cérium et des traces de thorium qui se trouvant sous forme d'un résidu insoluble qui, est ensuite séparé,

à procéder à la séparation et à la purification du néodyme ou du didyme par extraction liquide-liquide entre la phase aqueuse constituée par la solution aqueuse de nitrates de terres rares récupérée dans l'étape précédente et une phase organique contenant un agent d'extraction insoluble dans l'eau puis à récupérer le néodyme ou du didyme de la phase organique.

2. Procédé selon la revendication 1 caractérisé par le fait que la bastnaésite contient plus de 10% en poids de terres rares exprimées en oxydes de terres rares.

3. Procédé selon la revendication 1 caractérisé par le fait que la bastnaésite est concentrée et contient de 40 à 75% en poids de terres rares exprimées en oxydes de terres rares.

4. Procédé selon l'une des revendications 1 à 3, caractérisé par le fait que la température de calcination est supérieure à 400°C.

5. Procédé selon la revendication 4, caractérisé par le fait que la température de calcination est comprise entre 600 et 800°C.

6. Procédé selon l'une des revendications 4 et 5, caractérisé par le fait que la durée de calcination varie entre 30 minutes et 3 heures.

7. Procédé selon l'une des revendications 1 à 6, caractérisé par le fait que la lixiviation ménagée est effectuée à l'aide d'une solution d'acide nitrique de concentration 1 à 14N.

8. Procédé selon la revendication 7 caractérisé par le fait que la lixiviation ménagée est effectuée à l'aide d'une solution d'acide nitrique de concentration 3 à 9N.

9. Procédé selon l'une des revendications 7 et 8 caractérisé par le fait que la lixiviation est effectuée entre 20 et 90°C.

10. Procédé selon la revendication 9, caractérisé par le fait que le temps de séjour dans la solution de lixiviation est compris entre 30 minutes et 2 heures.

11. Procédé selon l'une des revendications 1 à 10 caractérisé par le fait que le traitement de lixiviation est effectué à 60°C pour un temps de séjour d'une heure.

12. Procédé selon l'une des revendications 1 à 11, caractérisé par le fait que l'on sépare un résidu insoluble de la solution de lixiviation.

13. Procédé selon l'une des revendications 1 à 12, caractérisé par le fait que la solution de lixiviation contient plus de 90% des terres rares trivalentes incluant le néodyme et moins de 10% de cérium initialement presents dans la bastnaésite.

14. Procédé selon la revendication 13, caractérisé par le fait que la concentration des terres rares exprimée en oxydes de terres rares est comprise entre 150 et 500 g/l.

15. Procédé selon l'une des revendications 1 à 14, caractérisé par le fait que l'on effectue une pré-neutralisation par addition d'une base dans la solution de nitrates de terres rares jusqu'à ce que le pH soit compris entre 2 et 4, ce qui permet d'éliminer le fluor, le cérium et les traces de thorium dans un résidu solide que l'on sépare.

16. Procédé selon la revendication 1 caractérisé par le fait que l'agent d'extraction est un agent d'extraction solvatant.

17. Procédé selon la revendication 16 caractérisé par le fait que l'agent d'extraction est le tributylphosphate.

**Patentansprüche**

1. Verfahren zur Abtrennung des Neodyms oder Didyms von Seltenen Erden, enthalten in Bastnäsit, das darin besteht, daß man:

eine Calcinierung des Bastnäsits durchführt,

eine schonende Auslaugung des calcinierten Bastnäsits mit Hilfe einer Salpetersäurelösung durchführt, indem man eine Menge Salpetersäure, die im wesentlichen der stöchiometrischen Menge der in dem Mineral vorhandenen Menge an dreiwertigen Seltenen Erden entspricht, einsetzt, so daß das Neodym und die dreiwertigen Seltenen Erden gelöst werden können, mit Ausnahme von Cer und Spuren von Thorium die sich in Form eines unlöslichen Rückstandes finden, der anschließend abgetrennt wird,

die Trennung und Reinigung von Neodym oder Didym durchführt durch flüssig/flüssig-Extraktion zwischen der wäßrigen Phase, die aus einer wäßrigen Lösung der Nitrate der Seltenen Erden besteht, die in der vorangehenden Stufe gewonnen worden sind, und einer organischen Phase, enthaltend ein in Wasser unlösliches Extraktionsmittel, und anschließend das Neodym oder Didym aus der organischen Phase gewinnt.

2. Verfahren nach Anspruch 1, dadurch gekennzeichnet, daß der Bastnäsit mehr als 10 Gew.-% Seltene Erden, angegeben als Seltenerdoxide, enthält.

3. Verfahren nach Anspruch 1, dadurch gekennzeichnet, daß der Bastnäsit konzentriert ist und 40 bis 75 Gew.-% Seltene Erden, ausgedrückt als Seltenerdoxide, enthält.

4. Verfahren nach einem der Ansprüche 1 bis 3, dadurch gekennzeichnet, daß die Calcinierungstemperatur über 400°C liegt.

5. Verfahren nach Anspruch 4, dadurch gekennzeichnet, daß die Calcinierungstemperatur zwischen 600 und 800°C liegt.

6. Verfahren nach einem der Ansprüche 4 und 5, dadurch gekennzeichnet, daß die Calinierungsdauer zwischen 30 min und 3 h variiert.

7. Verfahren nach einem der Ansprüche 1 bis 6, dadurch gekennzeichnet, daß die schonende Auslaugung mit Hilfe einer Salpetersäurelösung mit einer Konzentration von 1 bis 14 n durchgeführt wird.

8. Verfahren nach Anspruch 7, dadurch gekennzeichnet, daß die schonende Auslaugung mit Hilfe einer Salpetersaürelösung mit einer Konzentration von 3 bis 9 n durchgeführt wird.

9. Verfahren nach einem der Ansprüche 7 und 8, dadurch gekennzeichnet, daß die Auslaugung zwischen 20 und 90°C durchgeführt wird.

10. Verfahren nach Anspruch 9, dadurch gekennzeichnet, daß die Verweilzeit in der Auslauglösung zwischen 30 min und 2 h liegt.

11. Verfahren nach einem der Ansprüche 1 bis 10, dadurch gekennzeichnet, daß die Auslaugbehandlung bei 60°C während einer Verweilzeit von 1 h durchgeführt wird.

12. Verfahren nach einem der Ansprüche 1 bis 11, dadurch gekennzeichnet, daß man einen unlöslichen Rückstand von der Auslauglösung abtrennt.

13. Verfahren nach einem der Ansprüche 1 bis 12, dadurch gekennzeichnet, daß die Auslauglösung mehr als 90% dreiwertige Seltene Erden, einschließlich Neodym, und weniger als 10% Cer enthält, die ursprünglich in dem Basträsit vorhanden waren.

14. Verfahren nach Anspruch 13, dadurch gekennzeichnet, daß die Konzentration der Seltenen Erden, ausgedrückt als Seltenerdoxide, zwischen 150 und 500 g/l liegt.

15. Verfahren nach einem der Ansprüche 1 bis 14, dadurch gekennzeichnet, daß man eine Vorneutralisation durch Zugabe einer Base zu der Lösung der Seltenen Erdnitrate, bis der pH-Wert zwischen 2 und 4 liegt, durchführt, wodurch es möglich wird, das Fluor, des Cer und die Spuren von Thorium in dem verbleibenden festen Rückstand, den man abtrennt, zu eliminieren.

16. Verfahren nach Anspruch 1, dadurch gekennzeichnet, daß das Extraktionsmittel ein solvatisierendes Extraktionsmittel.

17. Verfahren nach Anspruch 16, dadurch gekennzeichnet, daß des Extraktionsmittel Tributylphosphat ist.

**Claims**

1. A process for the separation of neodymium or didymium from the rare earths contained in bastnaesite comprising:

effecting roasting of the bastnaesite,

effecting controlled leaching of the roasted bastnaesite by means of a solution of nitric acid using an amount of nitric acid which is substantially equal to the stoichiometric amount of the trivalent rare earths present in the ore, which permits solubilisation of the neodymium and the trivalent rare earths to the exclusion of cerium and the traces of thorium which are found in the form of an insoluble residue which is then separated, and

effecting separation and purification of the neodymium or didymium by liquid-liquid extraction as between the aqueous phase formed by the aqueous solution of nitrates of rare earths which is recovered in the preceding step and an organic phase containing a water-insoluble extraction agent, and then recovering the neodymium or didymium from the organic phase.

2. A process according to Claim 1 characterised in that the bastnaesite contains more than 10% by weight of rare earths expressed as rare earth oxides.

3. A process according to Claim 1 characterised in that the bastnaesite is concentrated and contains from 40 to 75% by weight of rare earths expressed as rare earth oxides.

4. A process according to one of Claims 1 to 3 characterised in that the roasting temperature is higher than 400°C.

5. A process according to Claim 4, characterised in that the roasting temperature is between 600 and 800°C.

6. A process according to one of Claims 4 and 5, characterised in that the duration of the roasting operation varies between 30 minutes and 3 hours.

7. A process according to one of Claims 1 to 6 characterised in that the controlled leaching operation is carried out by means of a solution of nitric acid at a concentration of from 1 to 14N.

8. A process according to Claim 7 characterised in that the controlled leaching operation is carried out by means of a solution of nitric acid at a concentration of from 3 to 9N.

9. A process according to one of Claims 7 and 8 characterised in that the leaching operation is carried out at between 20 and 90°C.

10. A process according to Claim 9 characterised in that the residence time in the leaching solution is between 30 minutes and 2 hours.

11. A process according to one of Claims 1 to 10 characterised in that the leaching treatment is carried out at 60°C for a residence time of 1 hour.

12. A process according to one of Claims 1 to 11 characterised by separating an insoluble residue from the leaching solution.

13. A process according to one of Claims 1 to 12 characterised in that the leaching solution contains more than 90% of the trivalent rare earths including the neodymium and less than 10% of cerium which are initially present in the bastenaesite.

14. A process according to Claim 13 characterised in that the level of concentration of the rare earths expressed as rare earth oxides is between 150 and 500 g/l.

15. A process according to one of Claims 1 to 14 characterised by effecting a pre-neutralisation operation by the addition of a base to the solution of nitrates of rare earths until the pH-value is between 2 and 4, which makes it possible to eliminate fluorine, cerium and the traces of thorium in a solid residue which is separated.

16. A process according to Claim 1 characterised in that the extraction agent is a solvating extraction agent.

17. A process according to Claim 16 characterised in that the extraction agent is tributylphosphate.

FIG. 1